# EUROPEAN PATENT APPLICATION

(11) **EP 3 009 931 A1**
(43) Date of publication of application: **20.04.2016**
(21) Application number: 15189722.0
(22) Date of filing: 14.10.2015
(51) Int. Cl.: G06F 9/54, G06F 9/44

(54) **ELECTRONIC DEVICE FOR INTERNET PROTOCOL COMMUNICATIONS**

(30) Priority: 17.10.2014 US 201462065015 P; 24.09.2015 US 201514864853
(71) Applicant: D2 Technologies Inc., Santa Barbara, CA 93101 (US)
(72) Inventor: Lindsay, David, Santa Barbara, CA California 93105 (US)
(74) Representative: Straus, Alexander

(57) **Abstract**

An electronic device (100) for internet protocol communications includes a memory (10), a plurality of application programming interfaces (14, 14a, 14b), a core software stack (15), and a processor (11). The core software stack (15) is stored in the memory (10) and is accessible by the plurality of application programming interfaces (14, 14a, 14b). By introducing the core software (15) shared by different application programming interfaces, communication interference, manufacturing effort, and memory footprint space can be reduced.

## Description

### Field of the Invention

The present invention relates to an electronic device for IP (Internet Protocol) communications, and more particularly, an electronic device with a common core software stack for accessing several applications.

### Background of the Invention

With the advancement of techniques, several electronic devices with multi-functional applications in conjunction with application programming interfaces (APIs) are widely adopted for IP (Internet Protocol) communications, such as Rich Communication Service (RCS). Specifically, an original equipment manufacturer (OEM) or their partners desire to integrate and standardize several APIs on a single interface for the developments. Contradictorily, operators may require difference APIs for developers (i.e., third party developers). Thus, a problem of supportability and compatibility of APIs may exist among application developers, electronic device (i.e., mobile device) OEMs, and middleware suppliers to the OEM.

Generally, some typical approaches for solving this problem are listed as below: (A) The first approach is to build each application independently for each API. Different APIs may share some common code. The OEMs have to manufacture a development having a supportability of multiple applications, one for each core stack. By doing so, different applications require different developer efforts, resulting in inefficiency. (B) In the second approach, after identifying a communication layer in a software stack, one API can be swapped with another accordingly. By doing so, the development can maintain a core stack by using an alternatively swapped operation of APIs. (C) The third approach is to build a superset API (i.e., the major feature API). In this approach, a slim layer is built on top layer for translating each custom API to the superset API. By doing so, the utility of superset API can reduce interference risk and manufacturing cost. However, this will increase software memory footprint space.

### Summary of the Invention

The present invention aims at providing an electronic device for reducing memory footprint space and increase transmission efficiency without any hardware modification.

This is achieved by an electronic device for IP (Internet Protocol) communications according to the claims here below. The dependent claims pertain to corresponding further developments and improvements.

As will be seen more clearly from the detailed description following below, the claimed electronic device for IP (Internet Protocol) communications includes a memory, a plurality of application programming interfaces, a core software stack, and a processor. The memory may be used for storing data of a plurality of applications. The plurality of application programming interfaces may be used for receiving user commands, each application programming interface of the plurality of application programming interfaces corresponding to an application of the plurality of applications. A core software stack may be stored in the memory and being accessible by the plurality of application programming interfaces. A processor may be coupled to the memory and configured to access data between the core software stack and the plurality of application programming interfaces according to the user commands.

The electronic device according to the present invention has a common core software stack which can be accessed by different APIs so that multi-applications can communicate to the common core software stack concurrently by a simple and efficient mechanism without any communication interference.

### Brief Description of the Drawings

In the following, the invention is further illustrated by way of example, taking reference to the accompanying drawings. Thereof
- FIG. 1: illustrates a block diagram of an electronic device according to an embodiment of the present invention;
- FIG. 2: illustrates a single application architecture of the electronic device in FIG. 1;
- FIG. 3: illustrates a multi-headed stack application architecture of the electronic device in FIG. 1;
- FIG. 4: illustrates a first communication method applied to the single application architecture of the electronic device in FIG. 1;
- FIG. 5: illustrates a first communication method applied to the multi-headed stack application architecture of the electronic device in FIG. 1;
- FIG. 6: illustrates a second communication method applied to the single application architecture of the electronic device in FIG. 1;
- FIG. 7: illustrates a second communication method applied to the multi-headed stack application architecture of the electronic device in FIG. 1;
- FIG. 8: illustrates a first multi-headed stack application architecture under an Android^{®} operating system of the electronic device in FIG. 1; and
- FIG. 9: illustrates a second multi-headed stack application architecture under the Android^{®} operating system of the electronic device in FIG. 1.

### Detailed Description

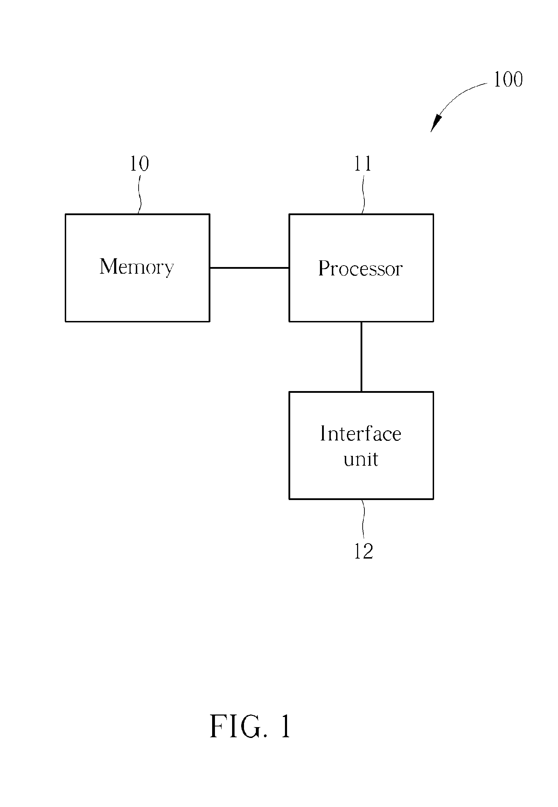

FIG. 1 illustrates a block diagram of an electronic device 100 according to an embodiment of the present invention. As shown in FIG. 1, the electronic device 100 includes a memory 10, a processor 11, and an interface unit 12. The memory 10 may be used for storing data of a plurality of applications. In the embodiment, the memory 10 can be any type of hardware. For example, the memory 10 can be a hard disk, a flash memory, or a random access memory. The plurality of applications can be any single or multi-functional application programs having compatability with one or more specific operating system, such as an Android^{®} operating system or IOS. The processor 11 can be a logic unit, CPU, MCU, or any programmable chip. The interface unit 12 can display or present a plurality of application programming interfaces (APIs) for receiving user commands. For example, the interface unit 12 can be a touch screen of a mobile phone. Each application programming interface of the plurality of application programming interfaces corresponds to an application of the plurality of applications. In the embodiment, data of the plurality of APIs corresponding to a common core software stack may be stored in the memory 10. The core software stack is accessible by the plurality of APIs. The processor 11 is coupled to the memory 12 and may be used for accessing/communicating data between the core software stack and the plurality of APIs according to the user commands. In other words, the plurality of applications in the electronic device 100 can use the same (common) core software stack to communicate the plurality of APIs. The electronic device 100 can be applied to IP (Internet Protocol) communications. A definition of application architecture and a method for data (i.e., commands and events) communication are illustrated below.

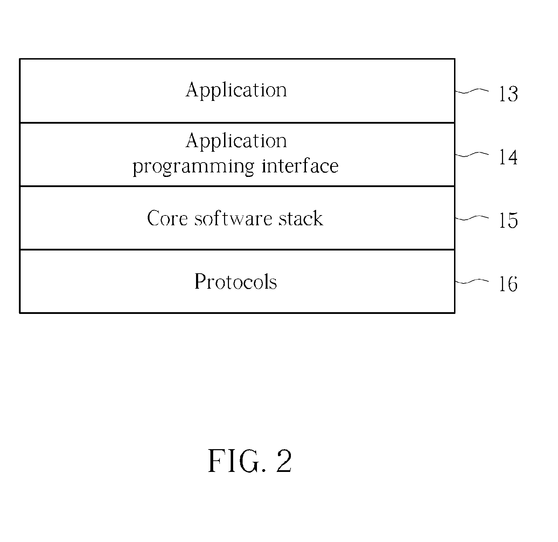

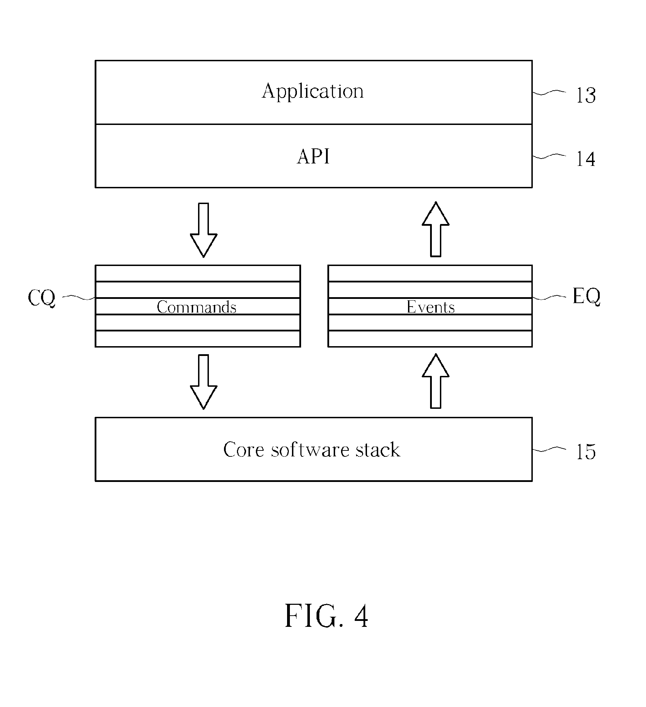

FIG. 2 illustrates a single application architecture of the electronic device 100. In FIG. 2, 4 layers are introduced in the application architecture. In the layer of protocols 16, a transmission control protocol, internet protocol, or wireless network protocol is defined as a basic communication language. The layer of core software stack 15 can be regarded as core programming software of an application 13 for managing the protocols 16. The layer of application programming interface (APIs) 14 may be established according to one or more functions of the application 13. The API 14 may be used for receiving user commands and can communicate with the core software stack 15. The layer of application 13 is the top layer of the application architecture. In the embodiment, a correlation between applications and APIs is injective (i.e., one-to-one mapping). To avoid using a superset API, a user can input user commands to different APIs associated with different applications, thereby leading to high operation convenience and operation efficiency. In the following, an architecture with several applications on the electronic device 100 is illustrated.

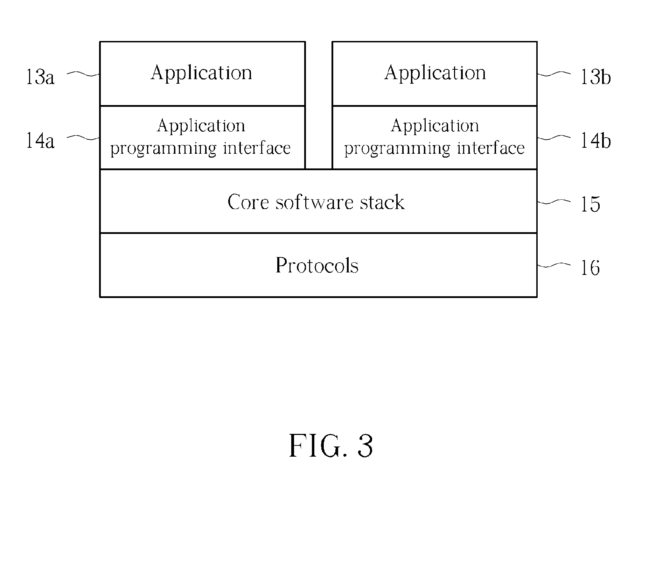

FIG. 3 illustrates a multi-headed stack application architecture of the electronic device 100. For presentation simplicity, 2 applications are introduced to present the multi-headed stack application architecture. In FIG. 3, an application 13a corresponds to an API 14a. An application 13b corresponds to an API 14b. The API 14a and the API 14b can be two identical APIs or two distinct APIs. The design of the multi-headed stack application architecture is that both API 14a and API 14b can communicate with a same (common) core software stack 15. In other words, the applications 13a and 13b can command the core software stack 15 to perform specific operations through a corresponding API. The specific operations can be a message sending operation or a file transmission (to a specific address) operation. In the embodiment, events and commands are considered as two communication data types between several APIs (14a and 14b) and the core software stack 15. The definition of events and commands, and a communication method of the application architecture are illustrated below.

FIG. 4 illustrates a first communication method applied to the single application architecture of the electronic device 100. After the API 14 receives a user command and transmits the user command to the core software stack 15, the core software stack 15 receives the user command and outputs an event to the API 14 (by the processor 11) accordingly. The events can be any report, feedback data, request, or response data. For example, the event can be the status of an application operation (i.e., message delivered) or an unsolicited event which is intended for the application 13 (i.e., request for file transfer received from an address). The API 14 can translate or compile the command and event used by the core software stack 15 to an interface identified by the application 13. In FIG. 4, the user commands received by the API 14 can be transmitted to the core software stack 15 as a command queue CQ separated by different threads. The command queue CQ performs a first-in-first-out (FIFO) process when many commands are buffered in the command queue CQ. Similarly, the events of the core software stack 15 can be outputted to the API 14 as an event queue EQ separated by different threads. The event queue EQ performs a first-in-first-out (FIFO) process when many events are buffered in the event queue EQ. In the embodiment, the core software stack 15 resides in a separate thread or process from the application 13. The separate thread or process is an optional design for the electronic device 100. However, when the separate thread or process is introduced, the risk of application 13 being unintentionally interacted with other applications can be minimized. When the separate thread or process is used for application 13, two essential requirements have to be met as two following conditions.
(A) The core software stack 15 must be able to support all commands and events with respect to all supported APIs.
(B) The APIs have to facilitate a simple and easily accessible communication from any application.

In FIG.4, when a thread-based communication technique is used, different threads can communicate with each other by using a shared memory mechanism, such as message queues (i.e., event queue EQ and the command queue CQ). Briefly, the application 13 uses the API 14 to initiate or receive a command. The API 14 translates (i.e., compile) the command into a message (i.e., a command data). Then, the message (command data) can be placed on the command queue CQ and processed by the core software stack 15. After the core software stack 15 receives the command data, when an event is triggered in the core software stack 15, the core software stack 15 notifies the intended application 13 by placing a message (event data) on the event queue EQ. Finally, the API 14 receives the message (event data), processes the message (event data) and notifies the application 13 of the event.

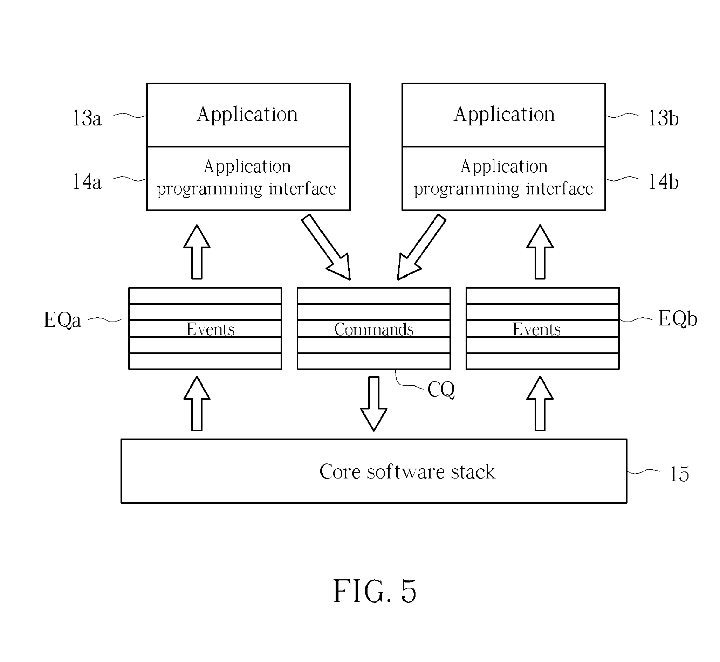

FIG. 5 illustrates the first communication method of the multi-headed stack application architecture of the electronic device 100. For presentation simplicity, 2 applications 13a and 13b are introduced to present the multi-headed stack application architecture. As shown in FIG. 5, the application 13a corresponds to the API 14a. The application 13b corresponds to the API 14b. The API 14a and the API 14b can be two identical APIs or two distinct APIs. Each application corresponds to its own set of event queue. For example, the application 13a corresponds to an event queue EQa. The application 13b corresponds to an event queue EQb. The message processing methods of the event queues EQa and EQb are similar to the event queue EQ in FIG. 4 and are thus not described herein. To optimize communication efficiency, the application 13a and the application 13b can share a command queue CQ. As indicated in FIG. 4, the command queue CQ shared by two applications 13a and 13b performs a first-in-first-out (FIFO) process when many commands from the application 13a and the application 13b are buffered into the command queue CQ.

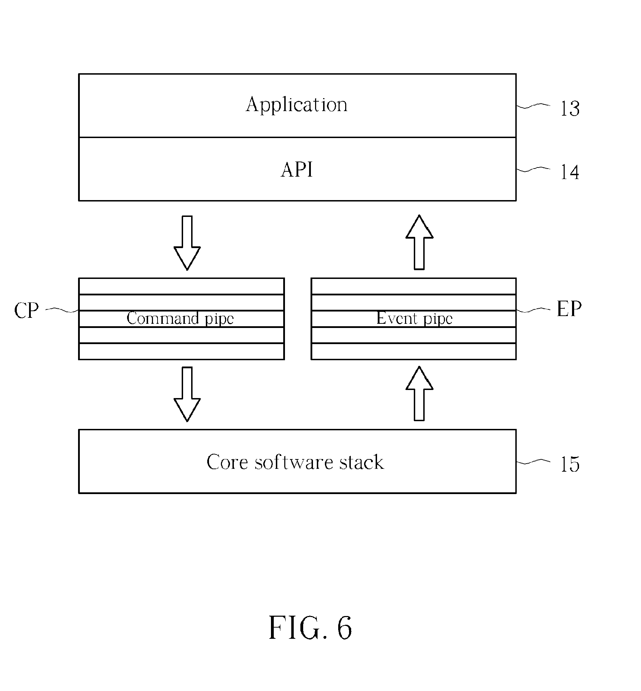

FIG. 6 illustrates a second communication method of the single application architecture of the electronic device 100. As shown in FIG. 6, the application architecture is similar to the application architecture in FIG .4. The difference is that when the core software stack 15 is in a separate thread process from the applications, an inter-process communication (IPC) mechanism can be used. Here, an operating system of the electronic device 100 provides a range of IPC mechanism, which can include remote procedure calls (RPC). The IPC mechanism can be applied as pipes and sockets in practice. For example, the command queue CQ in FIG. 4 is replaced with a command pipe CP in FIG. 6. The event queue EQ in FIG. 4 is replaced with an event pipe EP in FIG. 6. Similarly, the application 13 uses the API 14 to initiate or receive a command. The API 14 translates (i.e., compile) the command into a message (i.e., a command data). Then, the message (command data) is placed on the command pipe CP and processed by the core software stack 15. After the core software stack 15 receives the command data, when an event is triggered in the core software stack 15, the core software stack 15 notifies the intended application 13 by placing a message (event data) on the event pipe EQ. Finally, the API 14 receives the message (event data), processes the message (event data) and notifies the application 13 of the event.

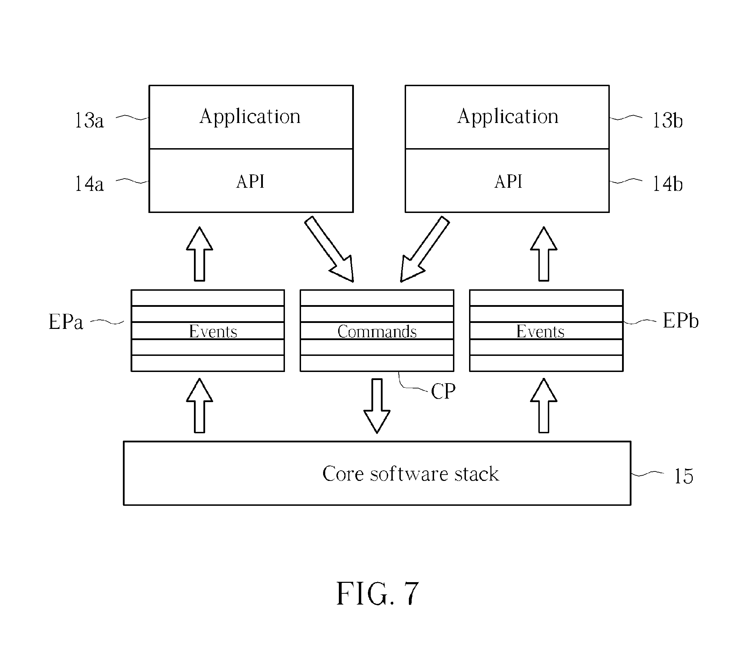

FIG. 7 illustrates a second communication method of the multi-headed stack application architecture of the electronic device 100. For presentation simplicity, 2 applications 13a and 13b are introduced to present the multi-headed stack application architecture. As shown in FIG. 7, the application 13a corresponds to the API 14a. The application 13b corresponds to the API 14b. The API 14a and the API 14b can be two identical APIs or two distinct APIs. Each application corresponds to its own set of event pipe. For example, the application 13a corresponds to an event pipe EPa. The application 13b corresponds to an event pipe EPb. To optimize communication efficiency, the application 13a and the application 13b can share a command pipe CP. As indicated in FIG. 6, the command pipe CP shared by two applications 13a and 13b performs a data pipe process when many commands from the application 13a and the application 13b are buffered in the command pipe CP.

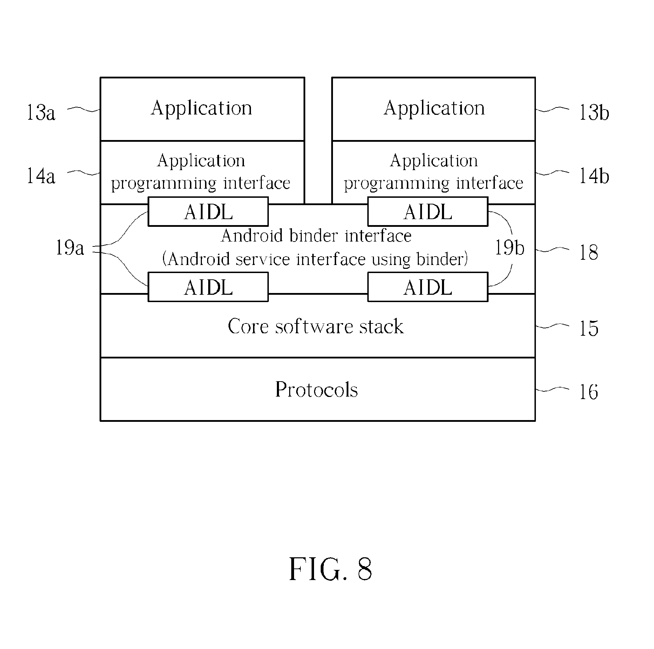

FIG. 8 illustrates a first multi-headed stack application architecture under an Android^{®} operating system of the electronic device 100. Without loss of generality, Android^{®} intents and a binder interface are used as mechanisms for communicating data under small/low bandwidth messages and events. As shown in FIG. 8, the core software stack 15 is implemented as an Android^{®} service. An application 13a and an application 13b use an Android^{®} binder interface 18 to communicate with a core software service (software stack 15) through an API 14a and an API 14b, respectively. Specifically, the Android^{®} binder (interface) 18 can be defined by an Android^{®} Interface Definition Language (AIDL) 19a and 19b. A core software interface of the core software stack 15 can be defined by the Android^{®} Interface definition Language (AIDL) for controlling commands and can be defined by a separated Android^{®} Interface Definition Language for controlling callbacks. Particularly, the Android^{®} binder interface 18 can be appropriately adjusted for optimizing communications between threads and the Android^{®} binder interface 18 defined by AIDL 19a and AIDL 19b, and optimizing the communication process of the Android^{®} binder interface 18 without any hardware modification. By using the Android^{®} binder interface 18 defined by AIDL 19a and AIDL 19b, the system designer can change the software process model of data communication without redefining or rebuilding the communication interface between the applications 13a and 13b and the core software stack 15.

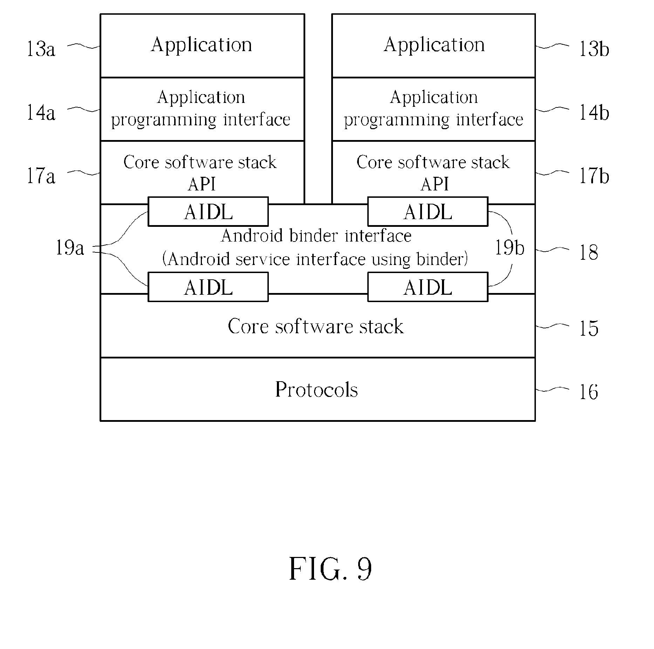

FIG. 9 illustrates a second multi-headed stack application architecture under an Android^{®} operating system of the electronic device 100. As shown in FIG .9, the multi-headed stack application architecture in FIG. 9 is similar to the multi-headed stack application architecture in FIG. 8. The difference is that a core software stack API 17a and a core software stack API 17b are introduced as two function interfaces embedded in the developer API. In other words, the core software stack API 17a and the core software stack API 17b are not defined by the AIDL 19a and the AIDL 19b.

In the embodiments, each application programming interface of the plurality of application programming interfaces can share some data or features with another application programming interface by using an operation system specific mechanism. For example, an API providing a full set of features such as IP calling, IM, file transfer, GeoLocation, image sharing, and video sharing may require a fully featured Rich Communication Service (RCS). Another API (i.e., a third party API) may only need to support a subset of these features, such as IM and file transfer. Another API for video games may support image sharing, and video sharing. All of these applications can be simultaneously supported by using data or features sharing technique, thereby increasing the operation efficiency.

To sum up, the embodiments disclose an electronic device and several application architecture approaches for internet protocol communications. The design is to introduce a common core software stack. When different APIs are enabled (available), the common core software stack can be accessed by different APIs. In other words, multi-applications can communicate to the common core software stack concurrently by a simple and efficient mechanism without any communication interference.

## Claims

1. An electronic device (100) for internet protocol communications, **characterized by** comprising:
a memory (10) configured to store data of a plurality of applications (13, 13a, 13b);
a plurality of application programming interfaces (14, 14a, 14b) configured to receive user commands, each application programming interface of the plurality of application programming interfaces (14, 14a, 14b) corresponding to an application of the plurality of applications (13, 13a, 13b);
a core software stack (15) stored in the memory (10) and being accessible by the plurality of application programming interfaces (14, 14a, 14b); and
a processor (11) coupled to the memory and configured to access data between the core software stack (15) and the plurality of application programming interfaces (14, 14a, 14b) according to the user commands.

2. The electronic device (100) of claim 1, **characterized in that** each application programming interface of the plurality of application programming interfaces (14a, 14b) uses a shared memory mechanism to communicate between a corresponding application and the core software stack (15).

3. The electronic device (100) of claim 1, **characterized in that** the core software stack (15) is configured to manage protocols (16).

4. The electronic device (100) of claim 1, **characterized in that** the user commands inputted to the plurality of application programming interfaces (14a, 14b) are transmitted to the core software stack (15) as a command queue (CQ) separated by different threads.

5. The electronic device (100) of claim 1, **characterized in that** the user commands inputted to the plurality of application programming interfaces (14a, 14b) are transmitted to the core software stack (15) as a command pipe (CP) separated by different threads.

6. The electronic device (100) of claim 1, **characterized in that** data of the core software stack (15) is transmitted to the plurality of application programming interfaces (14a, 14b) as event queues (EQa, EQb) separated by different threads.

7. The electronic device (100) of claim 1, **characterized in that** data of the core software stack (15) is transmitted to the plurality of application programming interfaces (14a, 14b) as event pipes (EPa, EPb) separated by different threads.

8. The electronic device (100) of claim 1, **characterized in that** each application programming interface of the plurality of application programming interfaces (14a, 14b) uses an Android^{®} inter-process communication mechanism to communicate between a corresponding application and the core software stack (15).

9. The electronic device (100) of claim 1, **characterized in that** the plurality of applications (14a, 14b) use an Android binder (18) to communicate with the core software stack (15).

10. The electronic device (100) of claim 9, **characterized in that** the Android binder (18) is defined by an Android^{®} Interface Definition Language (19a, 19b).

11. The electronic device (100) of claim 10, **characterized by** further comprising:
a core software interface (17a, 17b) defined by the Android^{®} Interface definition Language (19a, 19b) for controlling commands and defined by a separated Android^{®} Interface Definition Language for controlling callbacks.

12. The electronic device (100) of claim 1, **characterized in that** each application programming interface of the plurality of application programming interfaces (14a, 14b) uses a core software interface (17a, 17b) to communicate between a corresponding application and the core software stack (15).

13. The electronic device (100) of claim 1, **characterized in that** each application programming interface of the plurality of application programming interfaces (14a, 14b) uses an operation system specific mechanism to communicate between a corresponding application and the core software stack (15).

14. The electronic device (100) of claim 13, **characterized in that** the operation system specific mechanism is a socket system or a remote procedure call (RPC) system.

15. The electronic device (100) of claim 1, **characterized in that** each application programming interface of the plurality of application programming interfaces (14a, 14b) shares some data with another application programming interface by using an operation system specific mechanism.
